# FASCICULE DE BREVET EUROPEEN

(11) **EP 1 959 699 B1**
(45) Date de publication et mention de la délivrance du brevet: **29.04.2009**
(21) Numéro de dépôt: 08290038.2
(22) Date de dépôt: 17.01.2008
(51) Int. Cl.: H04W 8/30

(54) **Continuité de services par l'utilisation d'un HLR de secours**
Dienstkontinuität durch Einsatz eines Not-HLRs
Continuity of service by using a backup HLR

(30) Priorité: 15.02.2007 FR 0753268
(43) Date de publication de la demande: 20.08.2008
(73) Titulaire: Bouygues Telecom, 92100 Boulogne Billancourt (FR)
(72) Inventeur: Fouquet, Mathieu, 92190 Meudon (FR)
(74) Mandataire: Novagraaf IP

(56) Documents cités:
- WO-A-97/42783
- WO-A-20/06062475
- US-B1- 6 718 173
- US-B1- 7 013 139

## Description

La présente invention se rapporte au domaine des réseaux de téléphonie mobile et plus particulièrement à un dispositif, un système et un procédé associé pour assurer la continuité de services de téléphonie sur le réseau.

Les réseaux de téléphonies mobiles comprennent un équipement important, nommé enregistreur de localisation nominal (HLR - Home Location Register), qui officie en tant que base de données centrale contenant l'ensemble des données relatives à chacun des abonnés autorisés à utiliser le réseau mobile. Cette base de données est généralement répartie sur plusieurs équipements HLR pour des raisons pratiques de capacités de traitement et de stockage.

La base de données est automatiquement remplie lors de l'inscription d'un nouvel abonné auprès d'un opérateur de téléphonie. Le système d'information commerciale (SIC) à partir duquel le service commercial procède à l'inscription contractuelle du nouvel abonné met à jour la base de données HLR avec les nouvelles données saisies, notamment l'attribution d'identifiants de l'abonné (numéro IMSI [International Mobile Subscriber Identity] et numéro MSISDN correspondant au numéro d'appel de l'abonné [Mobile Station Integrated Services Digital Network]). Ce remplissage de la base de données HLR est toujours à l'initiative du système d'information SIC.

L'enregistreur HLR ainsi constitué a alors un comportement autonome. Le rôle du HLR est de contrôler la localisation d'un client abonné et de transmettre les données relatives aux services et aux droits de l'abonné aux autres équipements du réseau lorsque la localisation est autorisée. Un de ces autres équipements visés est notamment l'enregistreur de localisation visiteur VLR (Visitor Location Register).
Lorsqu'un abonné se localise sur un réseau, il entre sous la responsabilité d'un commutateur du service mobile MSC (Mobile Switching Center) couplé à un enregistreur VLR. Ce MSC / VLR construit d'abord un message d'authentification afin de vérifier l'identité de la carte SIM [Subscriber Identity Module] embarqué dans le terminal de l'abonné. Une fois le client authentifié, le MSC / VLR construit un message de demande de localisation qu'il envoie, sur un réseau de signalisation type SS7 (Signaling System Number 7), vers l'enregistreur central HLR du réseau de l'opérateur. L'enregistreur HLR met alors à jour, dans la base de données, la localisation courante de l'abonné.
Lors de la localisation, et donc après l'authentification, l'enregistreur HLR vérifie que le terminal abonné a le droit de se localiser (notamment lorsqu'il s'agit d'une localisation en itinérance (*roaming*)) et transmet, le cas échéant, les données relatives aux services disponibles pour l'abonné vers l'enregistreur VLR.

Même si l'enregistreur HLR apparaît comme étant une simple base de données, il s'agit d'un système qui reçoit directement et traite des messages ou transactions sur le réseau de signalisation de l'opérateur. Notamment, si l'enregistreur HLR subit une défaillance, le réseau de téléphonie devient inactif puisque seul l'enregistreur HLR gère les mises à jour de localisation des terminaux mobiles de façon générale dans le réseau. Lorsqu'un enregistreur HLR sur la pluralité de HLR structurant le réseau devient défaillant, il en résulte que certains abonnés _ ceux gérés par le HLR hors de fonctionnement _ ne peuvent plus se localiser, ne peuvent plus être appelés, envoyer ou recevoir des messages SMS (Short Message Services), ou profiter d'autres services du réseau de téléphonie mobile.

Pour répondre à cette problématique, il existe des procédures de secours d'un enregistreur HLR par lesquelles les données de configuration du HLR en panne, qui ont été au préalable sauvegardées, sont rechargées dans un enregistreur HLR de secours. Néanmoins, cette procédure nécessite un délai de quelques heures et donc une indisponibilité totale du réseau, pour les abonnés concernés, pendant ce laps de temps.

Il y a donc un besoin d'assurer un minimum de services aux abonnés dans un court délai.
On connaît dans l'art antérieur le document de brevet US 7013139, qui décrit un procédé de transfère de données activées se rapportant à un abonné, entre deux HLR comprenant chacun les mêmes données dont une partie est activée au niveau du premier HLR et est désactivée au niveau du deuxième et, l'est inversement pour l'autre partie, et le document de brevet US 6718173, qui décrit un système de gestion et de recuperation de données se rapportant à des informations de localisation d'un téléphone mobile, ainsi que la demande internationale WO/9742783 décrivant un mécanisme d'activation d'un terminal dans un réseau de téléphonie mobile.

On connaît également des systèmes de sauvegarde de données d'un ou plusieurs enregistreurs HLR actifs sur un autre enregistreur HLR dédié officiant comme HLR secours redondant. Puisque les données en base des HLR évoluent constamment, notamment du fait de l'itinérance des abonnés et donc de la mise à jour de la localisation courante en base de données, il est procédé à une sauvegarde dynamique des données vers le HLR secours par synchronisation entre ce dernier et les différents HLR actifs. A la défaillance d'un HLR, un signal approprié est émis et permet de basculer du HLR en panne sur l'enregistreur HLR secours associé. La demande de brevet US-2005/081095 décrit une solution comprenant de tels mécanismes.

Un désavantage de cette solution concerne la grande quantité de ressources mises en oeuvre, notamment par soit le déploiement en grand nombre de HLR secours afin de redonder chacun des enregistreurs HLR actifs, soit la nécessité d'un HLR secours muni de fortes capacités de traitement de sorte à gérer la synchronisation avec tous les HLR actifs et stocker l'ensemble des données de ceux-ci.
Un premier but de l'invention est de fournir une solution de continuité de services requerrant des ressources limitées en équipement secours de l'un quelconque des HLR qui tombe en panne. équipement secours de l'un quelconque des HLR qui tombe en panne.

Un autre désavantage de cette solution concerne la propagation non souhaitée de dysfonctionnements ou erreurs. En effet, si une donnée vient à corrompre un enregistreur HLR actif, par synchronisation dynamique du ou des HLR secours, cette donnée va également corrompre ces autres HLR secours entraînant une indisponibilité totale du réseau en cas de défaillance.
Un autre but de l'invention est ainsi d'offrir une solution plus sécurisée, notamment contre la propagation de données erronées ou corrompues.

Un autre désavantage de la solution de l'état de la technique réside dans l'utilisation d'une partie de la bande passante pour la synchronisation entre HLR et pour la transmission de données de mise à jour entre eux. Ceci engendre une diminution de qualité de services lors de pics de consommation par les abonnés. Ceci engendre également un trafic de données inutile puisque bon nombre de données sur le HLR secours sont ultérieurement modifiées avant que le HLR secours ne soit utilisé.
Un autre but de l'invention est donc de fournir une solution de continuité de services sans impact sur le trafic de données en fonctionnement normal du réseau.

Au moins un de ces buts est atteint par la présente invention en utilisant comme secours temporaire un équipement HLR, éventuellement initialement vide de toute donnée d'utilisateurs, qui, lors de demandes de localisation d'abonnés non référencés, sollicite de sa propre initiative le système d'information SIC pour récupérer un minimum de données permettant l'identification de l'abonné sur le réseau et donc son activation. Aucune synchronisation avec les HLR actifs n'est nécessaire, puisque les données sont récupérées en cas de besoin sur le système d'information. En outre, le trafic de données de mise à jour entre HLR actifs et HLR secours est évité.
Une telle solution peut être mise en oeuvre rapidement puisque seule une configuration simple est requise, se limitant à assurer le routage des messages dédiés au HLR en panne vers le HLR secours prenant le relais.
L'invention permet notamment de rétablir un service minimum pour les abonnés en attendant de récupérer un HLR secours avec une configuration plus complète.

A cet effet, l'invention a tout d'abord pour objet un dispositif d'enregistrement de localisation nominal (HLR-S) sur un réseau de téléphonie mobile, ledit dispositif comprenant des données d'utilisateurs incluant leur localisation courante dans ledit réseau et des moyens de traitement agencés pour recevoir une demande de localisation d'un terminal mobile d'utilisateur et mettre à jour la localisation courante dudit terminal mobile, ladite demande émanant d'un équipement (MSC/VLR) du réseau pour la localisation du terminal abonné. Selon l'invention, lesdits moyens de traitement sont agencés pour émettre, lorsque ledit dispositif ne comprend pas de données associées audit terminal mobile, une requête de demande de données dudit utilisateur à un système d'information (SIC) comprenant des données de l'ensemble des utilisateurs dudit réseau.
Ainsi, lorsque le dispositif HLR, par exemple utilisé comme HLR de secours pour assurer la continuité de services sur le réseau de téléphonie mobile, reçoit une demande de localisation concernant un abonné dont il n'a pas encore de données d'utilisateur, il procède à la récupération de données clés (numéro IMSI, MSISDN, par exemple) sur le système d'information pour gérer un profil simplifié de l'utilisateur. Ainsi, ce dernier accède tout de même au réseau et aux services de base définis par ce profil simplifié.
L'invention se distingue notamment des solutions connues par la sollicitation du système d'information SIC à l'initiative d'un HLR, le HLR secours en l'occurrence, afin de récupérer des données d'utilisateur. En effet, l'art antérieur ne met en avant qu'une alimentation initiale des HLR à l'initiative du SIC, sans qu'aucune connexion ultérieure ne se produise.

Dans un mode de réalisation, lesdits moyens de traitement sont agencés pour acquitter ladite demande auprès dudit équipement de sorte à permettre l'activation effective du terminal dans le réseau.

L'invention a également pour objet un système de continuité de services sur un réseau de téléphonie mobile, comprenant au moins un enregistreur normal de localisation nominal (HLR) et un enregistreur secours de localisation nominal (HLR-S), lesdits enregistreurs comprenant des données d'utilisateurs et étant aptes à traiter des demandes de localisation de terminaux mobiles d'utilisateurs, les demandes émanant d'au moins un équipement (MSC/VLR) du réseau, un système d'information (SIC) comprenant des données de l'ensemble des utilisateurs dudit réseau, et des moyens de bascule agencés pour router, lorsque ledit enregistreur normal (HLR) est défaillant, les demandes de localisation audit enregistreur secours (HLR-S). L'invention se particularise en ce que ledit enregistreur secours de localisation nominal (HLR-S) est agencé pour émettre, à réception d'une demande de localisation d'un terminal mobile et lorsque l'enregistreur secours (HLR-S) ne comprend pas de données d'utilisateurs associées audit terminal mobile, une requête de demande de données d'utilisateur audit système d'information (SIC).
L'enregistreur secours HLR n'a ainsi pas besoin d'être préconfiguré. Les données relatives aux abonnés sont enrichies au fur et à mesure des nouvelles demandes de connexion et localisation des terminaux, par récupération de données auprès du système d'information général SIC. Lorsque le HLR normal est en panne, les demandes de localisation sont alors reroutées vers le HLR secours, un configuration ad hoc pouvant être requise. Le HLR secours apparaît alors dans le réseau comme étant le HLR actif. Les demandes de localisation, les demandes relatives aux appels ou SMS entrants lui sont donc adressées. Le fonctionnement traditionnel du réseau n'est par conséquent que peu altéré.

Dans un mode de réalisation, les données d'utilisateurs stockées sur lesdits enregistreurs (HLR, HLR-S) comprennent des données relatives à la localisation courante desdits terminaux mobiles, lesdits enregistreurs (HLR, HLR-S) étant, en outre, agencés pour mettre à jour lesdites données relatives à la localisation courante lors du traitement des demandes de localisation.

Dans une configuration de l'invention, ledit enregistreur normal est identifié sur un réseau de signalisation (SS7), appartenant audit réseau de téléphonie mobile, par au moins une adresse (généralement par une adresse SCCP et une adresse MTP pour le réseau SS7), lesdites demandes de localisation étant émises sur ledit réseau de signalisation à destination de ladite adresse, lesdits moyens de bascule comprenant une interface utilisateur agencée pour paramétrer ledit enregistreur secours avec ladite adresse de sorte à router lesdites demandes de localisation vers l'enregistreur secours (HLR-S). Cette configuration de l'enregistreur secours est avantageusement simple pour permettre le fonctionnement de la solution selon l'invention. Du fait du paramétrage du HLR secours avec l'adresse "active" du HLR, les demandes de localisation sont automatiquement routées vers le nouvel HLR actif, c'est-à-dire le HLR secours mis en service.

Une variante à cette configuration appliquée uniquement lorsque la défaillance du HLR principal intervient, consiste à préparamétrer le réseau de routage globale pour tenir compte d'une adresse principale de routage correspondant au HLR normal et une adresse de second choix correspondant au HLR secours. Cette configuration par défaut dans le réseau permet en cas d'échec pour joindre un HLR sur son adresse MTP (routage SS7 couche basse) de router en second choix vers le HLR de secours (cas de la défaillance du HLR normal). Le réseau procède ainsi automatiquement au routage des requêtes ou demandes vers le HLR secours, aucune configuration du HLR secours n'est alors nécessaire.
A cet effet, les moyens de bascule comprennent le préparamétrage dudit réseau en indiquant, dans la couche protocolaire MTP de signalisation dudit réseau, une première adresse de l'enregistreur normal et une deuxième adresse de l'enregistreur secours, le routage des demandes de localisation sur le réseau basculant automatiquement sur ladite deuxième adresse lorsque ledit enregistreur normal est défaillant.

Selon deux modes de réalisation :
- ledit enregistreur secours (HLR-S) comprend un profil par défaut de services disponibles sur ledit réseau et est agencé pour affecter ledit profil par défaut audit terminal mobile ;
- ledit enregistreur secours (HLR-S) comprend une pluralité de profils de services disponibles sur ledit réseau et est agencé pour affecter un desdits profils audit terminal mobile en fonction de données retournées par ledit système d'information (SIC) en réponse à ladite requête.
Dans la première variante, la gestion est simplifiée par l'utilisation d'un seul profil pour tous les abonnés. Ce profil autorise l'accès aux services de base du réseau de téléphonie mobile, en l'espèce la connexion et l'établissement de communication depuis et vers l'abonné. Eventuellement, la transmission de messages SMS peut intégrer ce profil.
Dans la deuxième variante, plusieurs profils existent, notamment des profils liés à la nature des abonnements des utilisateurs en vue de la facturation. L'enregistreur HLR récupère alors sur le système d'information des données à partir desquelles un choix de profil peut être fait, par exemple, le type de souscription "prépayé" ou "postpayé" associé à l'abonné.

L'invention a également pour objet un procédé de continuité de service sur un réseau de téléphonie mobile, dans lequel des demandes de localisation de terminaux mobiles émanent d'au moins un équipement de réseau (MSC/VLR) pour être traitées par au moins un enregistreur normal de localisation nominal (HLR), le procédé comprenant une étape de routage desdites demandes de localisation à destination d'un enregistreur secours de localisation nominal (HLR-S), lorsque ledit enregistreur normal (HLR) est défaillant et, en outre, à réception d'une demande de localisation d'un terminal mobile, une étape ultérieure selon laquelle ledit enregistreur secours (HLR-S) émet, lorsque ledit enregistreur secours (HLR-S) ne comprend pas de données d'utilisateur associées audit terminal mobile, une requête de demande de données d'utilisateur à un système d'information (SIC) comprenant des données de l'ensemble des utilisateurs dudit réseau.
Par ce mécanisme, le HLR secours non préconfiguré accède aux données utiles pour permettre efficacement la tenue des services minimum en matière de téléphonie mobile. La sollicitation du système d'information permet de s'affranchir de ressources matérielles importantes et d'opérations de sauvegarde synchronisées lors du fonctionnement normal du réseau.

Il est à noter que les messages d'authentification représentent environ 30 à 40 % du nombre de messages échangés sur un réseau SS7.
Dans un mode de réalisation, le procédé comprend, préalablement à ladite étape de routage, une étape de désactivation de mécanismes d'authentification des terminaux mobiles auprès dudit au moins un équipement de réseau (MSC/VLR). Cette désactivation limite les échanges entre l'équipement VLR et l'enregistreur HLR secours, et par conséquent limite également la quantité de données à récupérer auprès du système d'information SIC (les données relatives à l'identification, par exemple une clé secrète, ne sont plus utiles).

Cette limitation de la quantité de données à récupérer s'avère importante à la mise en place de l'enregistreur secours. En effet, lors du basculement sur le HLR secours selon l'invention, un grand nombre d'abonnés tentent alors de se localiser, ce qui engendre un nombre important de connexions entre ce HLR secours et le système d'information. L'authentification désactivée permet ainsi d'éviter la surcharge du réseau lorsque le HLR tombe en panne.

Néanmoins, il est possible de réaliser le secours sans désactiver l'authentification. Pour cela le SIC doit transmettre, en plus de l'IMSI, la clé de chiffrement au HLR secours. La fonction AuC (Authentication Center) doit, quant à elle, être activée dans le HLR secours afin qu'il puisse constituer les triplets d'authentification et les transmettre au MSC/VLR pour authentifier le terminal mobile.

Afin de permettre le reroutage des demandes de localisation vers le nouvel HLR secours, il est utile de configurer ce dernier. A cet effet, il est prévu que ledit enregistreur normal (HLR) est identifié sur un réseau de signalisation (SS7), appartenant audit réseau de téléphonie mobile, par une adresse, lesdites demandes de localisation étant émises sur ledit réseau de signalisation à destination de ladite adresse, le procédé comprenant une étape de configuration dudit enregistreur secours (HLR-S) avec ladite adresse dans le réseau de signalisation de sorte à router lesdites demandes de localisation vers l'enregistreur secours (HLR-S).
Selon une variante, il est envisagé que ledit réseau est préparamétré pour renseigner une adresse principale de routage identifiant l'enregistreur normal et une deuxième adresse de routage indiquant l'enregistreur secours, le routage des demandes de localisation sur ledit réseau étant réalisé, en fonctionnement normal, à destination de l'adresse principale et basculant automatiquement, lorsque ledit enregistreur normal est défaillant, à un routage à destination de la deuxième adresse.

Dans un mode de réalisation, ladite requête concerne une demande d'identifiant de réseau dudit terminal mobile (MSISDN).

Dans une utilisation conventionnelle des enregistreurs HLR visant à mémoriser la localisation effective des abonnés, il est prévu que lesdits enregistreurs (HLR, HLR-S) comprennent des données relatives à la localisation courante desdits terminaux mobiles, le procédé comprenant une étape de traitement de la demande de localisation d'un terminal mobile par ledit enregistreur recevant ladite demande, le traitement comprenant la mise à jour de ladite localisation courante dudit terminal mobile.

Dans un mode de réalisation, le procédé comprend, en outre, une étape d'affectation, par ledit enregistreur secours (HLR-S), d'un profil audit terminal mobile, ledit profil étant un profil de services disponibles sur ledit réseau. Ce profil peut être défini par défaut.
Plus particulièrement, selon une alternative à l'unique profil par défaut, ledit profil affecté est choisi parmi une pluralité de profils en fonction de données retournées par ledit système d'information (SIC) en réponse à ladite requête.

On comprendra mieux l'invention à l'aide de la description, faite ci-après à titre purement explicatif, d'un mode de réalisation de l'invention, en référence à la figure annexée :

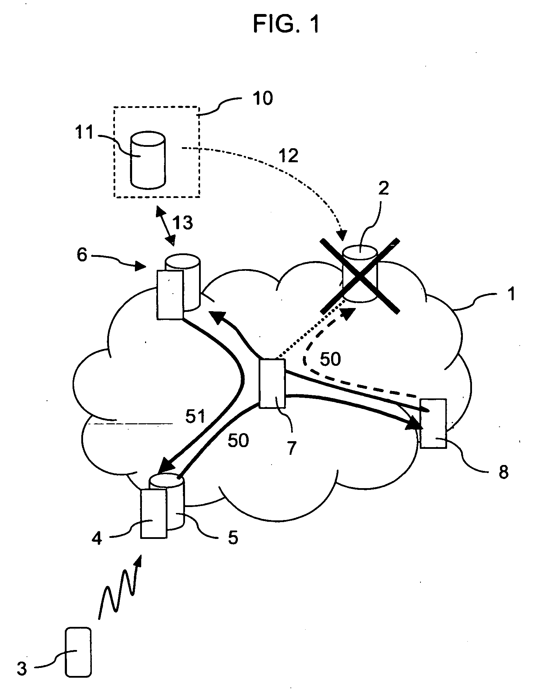

- Fig. 1 illustre un exemple d'architecture réseau pour la mise en oeuvre de l'invention.

La Fig.1 représente un réseau 1 de téléphonie mobile incluant un réseau de transport SS7 de type signalisation dans lequel un enregistreur de localisation nominal HLR 2 est utilisé pour gérer la connexion et la localisation des terminaux mobiles 3 d'abonnés au réseau. Un système d'information commercial SIC 10 comprend une base de données 11 contenant l'ensemble des données relatives aux abonnés. A la souscription de l'un d'eux auprès de l'opérateur propriétaire du réseau 1, le service commercial approprié enregistre les données traditionnelles de l'abonné (nom, adresse, références bancaires, ...) ainsi que les identifiants qui lui sont attribués pour son identification sur le réseau : numéro IMSI associé à la carte SIM fournie, numéro MSISDN correspondant au numéro de téléphone "traditionnel" de l'abonné, auquel il est joignable. Lorsque l'inscription est valide, c'est-à-dire que l'abonné peut utiliser le réseau 1, une partie des données permettant notamment l'identification de l'abonné sur le réseau est transmise (voir flèche 12 discontinue Fig. 1) par "push" (modèle du pousser où la transmission est à l'initiative de l'émetteur uniquement, ici le SIC 10) depuis le système d'information 10 au HLR 2.

Les principales fonctionnalités d'un enregistreur de localisation nominal concernent :
- la gestion de la mobilité des abonnés au travers de la mise à jour de leur position au sein de zones administratives découpant le réseau (cellule du réseau). L'itinérance de l'abonné d'une cellule à une autre est suivie par le HLR à l'aide de données mises à jour dans une base du HLR. Cette mise à jour fait suite à l'émission par un équipement de connexion (4, 5) d'une demande de localisation (50) déclenchée par la connexion du mobile 3. Ces équipements de connexion réseau sont notamment le centre de commutation MSC 4 et l'enregistreur de localisation visiteur VLR 5 dédié à une partie des cellules du réseau. En présence de plusieurs HLR 2 sur le réseau, un HLR virtuel 8 réalise une opération de routage de l'ensemble des demandes de localisation adressées aux HLR du réseau vers le HLR concerné par l'abonné. Un tel HLR virtuel 8 permet d'optimiser le remplissage des HLR 2.
   Généralement, le HLR 2 mémorise la localisation du terminal 3, non pas à la cellule de radiocommunication près du réseau, mais à une zone radio près associée à un équipement MSC/VLR 4/5 (qui gère ainsi l'ensemble des cellules radio composant la zone). La demande de localisation 50 est réalisée au travers du protocole MAP (*Mobile Application Part*) par la transmission de messages entre le MSC/VLR et le HLR. Notamment, le MSC/VLR envoie l'identifiant IMSI de l'abonné 3 (récupéré sur le terminal) ;
- la transmission (51) aux équipements de connexion (4, 5) type VLR de données de l'abonné lorsque ce dernier se connecte pour la première fois dans une des cellules sous le contrôle de cet équipement. Cette transmission est une réponse à la demande 50 par laquelle le HLR envoie au MSC/VLR le numéro d'appel MSISDN ainsi que les services que l'abonné a le droit d'utiliser

Accessoirement, le HLR réalise également la transmission de données pour le fonctionnement d'équipements annexes, tels que le serveur de SMS ou des passerelles vers d'autres réseaux, et le retrait des données de l'utilisation d'un ancien enregistreur VLR lorsque l'abonné a quitté la zone concernée par ce VLR.

En pratique, il est également prévu une authentification préalable de l'abonné se connectant pour la première fois dans la zone contrôlée par un MSC/VLR. Cette procédure est déjà connue sous l'appellation de *Send Authentication Info* [Envoi d'information d'authentification] dans les versions 2 et 3 du protocole MAP et *Send Parameters* [Envoi de paramètres] dans la version 1.

Lorsque le HLR 2 normal subit une avarie, l'administrateur du réseau 1 configure ce dernier de sorte qu'un enregistreur de localisation nominal HLR secours 6 selon l'invention prend le relais du HLR 2 défaillant.

Cet HLR secours 6 comprend l'ensemble des fonctionnalités principales des HLR à l'exception qu'il ne contient a priori aucune donnée relative aux utilisateurs. Cela permet de l'utiliser quelque soit l'équipement HLR 2 tombé en panne parmi l'ensemble des HLR du réseau. De ce fait, un seul HLR de dimensionnement normal est nécessaire pour suppléer un enregistreur défaillant.

Sa base de données est alors remplie comme suit, au fur et à mesure de l'utilisation du réseau par les abonnés initialement "inscrits" sur le HLR 2 en panne.

La configuration du réseau pour basculer sur ce HLR 6 secours est réalisée par :
- une éventuelle désactivation de l'authentification sur tous les MSC/VLR 4/5 du réseau. Cette désactivation permet d'éviter la saturation du réseau SS7 lors de ce type de panne par un trop grand nombre d'envois sous forme de rappels de demandes d'authentification au HLR 2 ; et
- la commutation (switch) des liens vers le HLR en panne vers le HLR tampon. Une façon d'atteindre cette commutation effective est de paramétrer directement les commutateurs STP (Signalling Transfert Point) 7 ou tout équipement de routage dans le réseau pour router vers le HLR secours les demandes. Dans cette réalisation, on envisage également que ces équipements sont préparamétrés pour router automatiquement vers le HLR normal, en fonctionnement normal, et par défaut vers le HLR secours lorsque le HLR normal ne répond plus. C'est notamment la couche protocolaire MTP du réseau de signalisation SS7 qui est paramétrée pour indiquer ces au moins deux adresses de routage.
   Une variante privilégiée est de configurer le HLR secours 6 avec l'adresse SCCP (*Signaling Connection Control Part*) et MTP (*Message Transfer Part* - Point Code) du HLR 2 normal en panne à l'aide d'une interface utilisateur appropriée. Ce faisant, les messages/requêtes adressées au HLR 2 normal, indépendamment de savoir si ce dernier est opérationnel ou pas, sont automatiquement distribuées au nouvel HLR secours 6.

Ainsi, après sa reconfiguration, le HLR secours 6 apparaît dans le réseau comme le HLR en panne 2. Les demandes de localisation, les demandes relatives aux appels ou SMS entrants qui concernent des abonnés associés au HLR 2 en panne lui sont donc adressées. Les autres demandes sont transmises aux autres HLR.

En fonctionnement et selon le remplissage de sa base de données, lorsque le HLR secours 6 reçoit une demande de localisation, soit il détient des données en base relatives à l'abonné concerné et procède à un traitement traditionnel de la demande (mise à jour de la localisation, transmission de données complémentaires liées à des services éventuels), soit, si aucune donnée de l'abonné n'est présente en base, il transmet une requête 13 vers le SIC 10 pour obtenir le numéro MSISDN de l'abonné.

Une fois le MSISDN retourné par le SIC 10 et obtenu par le HLR secours 6, ce dernier se comporte comme un HLR normal et répond au VLR 5 en autorisant la localisation et en transmettant un profil générique de services autorisés à l'abonné. Ce profil générique permet d'appeler, d'être appelé, d'envoyer ou de recevoir des SMS. Le HLR secours 6 note le VLR où est localisé le client comme le ferait n'importe quel VLR : mise à jour de la localisation de l'abonné en base.

Des échanges plus complexes peuvent alors s'instaurer entre HLR secours 6 et le MSC/VLR 4/5, notamment pour obtenir de ces derniers des numéros d'itinérance de station mobile MSRN (Mobile Station Roaming Number) permettant d'acheminer les appels entrants vers le MSC.

En limitant les données abonnés détenues par le HLR secours 6 à celles (limitées pour répondre rapidement aux demandes) récupérées du SIC 10, tous les services ne sont pas assurés car ceux-ci dépendent du nombre d'informations transmises par le SIC. Les services principaux qui sont assurés concernent :
- l'émission d'appel,
- la réception d'appel,
- l'émission de SMS,
- la réception de SMS,
- le service VMS (Voice Messaging System), boîte vocale.

D'autres réalisations de l'invention peuvent être envisagées. Notamment, le SIC 10, en réponse à la requête 13, peut transmettre des indications portant sur le fait que l'abonné correspond à un contrat prépayé ou à une utilisation postpayée. Le HLR secours 6 peut alors être préconfiguré pour gérer au moins deux profils "type" d'abonnés correspondant aux souscriptions de type postpayée et de type prépayée. L'affectation d'un profil à l'abonné par le HLR secours 6 est alors réalisée en fonction des indications reçues en réponse à la requête 13. Cette réalisation permet d'accroître la qualité de service aux utilisateurs en ciblant précisément les services autorisés.

Le système selon l'invention présente l'avantage d'offrir un déploiement rapide d'un équipement de secours qui peut être affecté à n'importe quel équipement HLR défaillant. Une telle solution peut donc venir en superposition à des solutions HLR de redondance déjà existantes mais dont la mise en place peut nécessiter un délai de déploiement ou de configuration important. Le HLR secours selon l'invention prend alors le relais pendant ce délai en assurant un minimum de qualité de service aux abonnés.

## Revendications

1. Dispositif d'enregistrement de localisation nominal (6) sur un réseau de téléphonie mobile (1), ledit dispositif (6) comprenant des données d'utilisateurs incluant leur localisation courante dans ledit réseau et des moyens de traitement agencés pour recevoir une demande de localisation (50) d'un terminal mobile (3) d'utilisateur et mettre à jour la localisation courante dudit terminal mobile, ladite demande émanant d'un équipement (4, 5) du réseau (1), **caractérisé en ce que** lesdits moyens de traitement sont agencés pour émettre, lorsque ledit dispositif (1) ne comprend pas de données associées audit terminal mobile (3), une requête (13) de demande de données à un système d'information commerciale (10) comprenant des données de profil de l'ensemble des utilisateurs dudit réseau, permettant audit dispositif de récupérer un minimum de données de profil de l'utilisateur pour constituer un profil simplifié de l'utilisateur sur la base duquel l'activation effective du terminal est réalisée sur ledit réseau.

2. Dispositif (6) selon la revendication 1, dans lequel ladite requête (13) porte sur au moins un identifiant réseau dudit terminal mobile.

3. Système de continuité de services sur un réseau de téléphonie mobile (1), comprenant au moins un enregistreur de localisation nominal (2) et un enregistreur secours de localisation nominal (6), lesdits enregistreurs comprenant des données d'utilisateurs et étant aptes à traiter des demandes de localisation (50) de terminaux mobiles d'utilisateurs (3), les demandes (50) émanant d'au moins un équipement (4, 5) du réseau (1),
un système d'information (10) comprenant des données de l'ensemble des utilisateurs dudit réseau, et
des moyens de bascule agencés pour router, lorsque ledit enregistreur (2) est défaillant, les demandes de localisation (50) audit enregistreur secours de localisation nominal (6), **caractérisé en ce que** ledit enregistreur secours de localisation nominal (6) est agencé pour émettre, à réception d'une demande de localisation (50) d'un terminal mobile (3) et lorsque l'enregistreur secours de localisation nominal (6) ne comprend pas de données d'utilisateurs associées audit terminal mobile (3), une requête (13) de demande de données d'utilisateur audit système d'information (10), ledit enregistreur (6) secours de localisation nominal étant apte à constituer à partir d'un minimum de données reçues un profil simplifié de l'utilisateur sur la base duquel l'activation effective du terminal est réalisée sur ledit réseau.

4. Système selon la revendication 3, dans lequel les données d'utilisateurs stockées sur lesdits enregistreurs (2, 6) comprennent des données relatives à la localisation courante desdits terminaux mobiles (3), lesdits enregistreurs (2, 6) étant, en outre, agencés pour mettre à jour lesdites données relatives à la localisation courante lors du traitement des demandes de localisation (50).

5. Système selon la revendication 3 ou 4, dans lequel ledit enregistreur est identifié sur un réseau de signalisation, appartenant audit réseau de téléphonie mobile (1), par au moins une adresse, lesdites demandes de localisation (50) étant émises sur ledit réseau de signalisation à destination de ladite adresse,
lesdits moyens de bascule comprenant une interface utilisateur agencée pour paramétrer ledit enregistreur secours avec ladite adresse de sorte à router lesdites demandes de localisation vers l'enregistreur secours (6).

6. Système selon la revendication 3 ou 4, dans lequel lesdits moyens de bascule comprennent le préparamétrage dudit réseau (1) en indiquant, dans la couche protocolaire MTP de signalisation dudit réseau, une première adresse de l'enregistreur (1) et une deuxième adresse de l'enregistreur secours (6), le routage des demandes de localisation (50) sur le réseau basculant automatiquement sur ladite deuxième adresse lorsque ledit enregistreur (1) est défaillant.

7. Système selon l'une des revendications 3 à 6, dans lequel ledit enregistreur secours (6) comprend un profil par défaut de services disponibles sur ledit réseau et est agencé pour affecter ledit profil par défaut audit terminal mobile (3).

8. Système selon l'une des revendications 3 à 6, dans lequel ledit enregistreur secours (6) comprend une pluralité de profils de services disponibles sur ledit réseau (1) et est agencé pour affecter un desdits profils audit terminal mobile (3) en fonction de données retournées par ledit système d'information (10) en réponse à ladite requête (13).

9. Procédé de continuité de service sur un réseau de téléphonie mobile (1), dans lequel des demandes de localisation (50) de terminaux mobiles (3) émanent d'au moins un équipement de réseau (4, 5) pour être traitées par au moins un enregistreur de localisation nominal (2), le procédé comprenant une étape de routage desdites demandes de localisation (50) à destination d'un enregistreur secours de localisation nominal (6), lorsque ledit enregistreur (2) est défaillant, **caractérisé en ce que** le procédé comprend, en outre, à réception d'une demande de localisation (50) d'un terminal mobile (3), une étape ultérieure selon laquelle ledit enregistreur secours (6) émet, lorsque ledit enregistreur secours (6) ne comprend pas de données d'utilisateur associées audit terminal mobile (3), une requête (13) de demande de données d'utilisateur à un système d'information (10) comprenant des données de l'ensemble des utilisateurs dudit réseau et une étape de réception par l'enregistreur de secours d'un minimum de données de profil utilisateur permettant de constituer un profil simplifié de l'utilisateur sur la base duquel l'activation effective du terminal est réalisée sur ledit réseau.

10. Procédé selon la revendication 9, comprenant, préalablement à ladite étape de routage, une étape de désactivation de mécanismes d'authentification des terminaux mobiles auprès dudit au moins un équipement de réseau (4, 5).

11. Procédé selon la revendication 9 ou 10, dans lequel ledit enregistreur (2) est identifié sur un réseau de signalisation (SS7), appartenant audit réseau de téléphonie mobile (1), par une adresse, lesdites demandes de localisation (50) étant émises sur ledit réseau de signalisation à destination de ladite adresse,
le procédé comprenant une étape de configuration dudit enregistreur secours (6) avec ladite adresse dans le réseau de signalisation de sorte à router lesdites demandes de localisation vers l'enregistreur secours (6).

12. Procédé selon la revendication 9 ou 10, dans lequel ledit réseau (1) est préparamétré pour renseigner une adresse principale de routage identifiant l'enregistreur (1) et une deuxième adresse de routage indiquant l'enregistreur secours (6),
le routage des demandes de localisation (50) sur ledit réseau (1) étant réalisé, en fonctionnement normal, à destination de l'adresse principale et basculant automatiquement, lorsque ledit enregistreur est défaillant, à un routage à destination de la deuxième adresse.

13. Procédé selon l'une quelconque des revendications 11 à 12, dans lequel ladite requête (13) concerne une demande d'identifiant de réseau dudit terminal mobile (MSISDN).

14. Procédé selon l'une quelconque des revendications 9 à 13, dans lequel lesdits enregistreurs (2, 6) comprennent des données relatives à la localisation courante desdits terminaux mobiles (3), le procédé comprenant une étape de traitement de la demande de localisation (50) d'un terminal mobile par ledit enregistreur recevant ladite demande, le traitement comprenant la mise à jour de ladite localisation courante dudit terminal mobile.

15. Procédé selon l'une quelconque des revendications 9 à 14, comprenant une étape d'affectation, par ledit enregistreur secours (6), d'un profil audit terminal mobile, ledit profil étant un profil de services disponibles sur ledit réseau (1).

16. Procédé selon la revendication précédente, dans lequel ledit profil affecté est choisi parmi une pluralité de profils en fonction de données retournées par ledit système d'information (10) en réponse à ladite requête.

## Claims

1. A device for the home location registering (6) on a mobile telephone network (1), said device (6) including user data including the current location thereof in said network and processing moans so arranged as to receive a request for Lhe location (50) of a user mobile terminal (3) and to update the current location of said mobile terminal, said request being emitted by one equipment (4,5) of the network (1), **characterised in that** said processing means are so arranged as to emit, when said device (1) has no data associated with said mobile terminal (3) a request (13) for data to a commercial information system (10) including data on the profile of all the users of said network, thus allowing the device to collect a minimum of data on the user's profile to build a user's simplified profile on which the effective activation of the terminal on said network is based.

2. A device (6) according to claim 1, wherein said request (13) relates to at least one network identifier of said mobile terminal.

3. A system of service continuity on a mobile telephone network (1), comprising at least one home location register (2) and one home location standby register (6), said registers including user data and being able to process requests for the location (50) of user mobile terminals (3), the requests (50) being emitted by at least one equipment (4, 5) of the network (1),
an information system (10) including data on all the users of said network, and
flip-flop means so arranged as to route, when said register (2) is failing, the requests for location (50) to said home location standby register (6), **characterised in that** said home location standby register (6) is so arranged as to emit, upon reception of a request locating (50) from a mobile terminal (3) and when the home location standby register (6) has no user data associated with said mobile terminal (3), a request (13) for user data from said information system (10), said home location standby register (6) being able to build up from a minimum of data received a simplified profile of the user on which the effective activation of the terminal on said network is based.

4. A system according to claim 3, wherein the user data stored in said registers (2, 6) include data relating to the current location of said mobile terminals (3), said registers (2, 6) being further so arranged as to update said data relating to the current location upon the processing of the requests for location (50).

5. A system according to claim 3 or 4, wherein said register is identified on a signalling network belonging to said mobile telephone network (1) by at least one address, said requests for location (50) being emitted on said signalling network to said address,
said flip-flop means including a user interface so arranged as to set the parameters of said standby register with said address so as to route said requests for location to the standby register (6).

6. A system according to claim 3 or 4, wherein said flip-flop means include the pre-setting of the parameters of said network (1) by indicating in the signalling MTP protocol layer of said network, a first address of the register (1) and a second address of the standby register (6), with the routing of the requests for location (50) on the network being automatically switched to said second address when said register (1) is failing.

7. A system according to one of claims 3 to 6, wherein said standby register (6) includes a profile by default of services available on said network and is so arranged as to assign said default profile to said mobile terminal (3).

8. A system according to one of claims 3 to 6, wherein said standby register (6) includes a plurality of profiles of services available on said network (1) and is so arranged as to assign one of said profiles to said mobile terminal (3) as a function of the data returned by said information system (10) as an answer to said request (13).

9. A method for providing a service continuity on a mobile telephone network (1), wherein requests for location (50) of mobile terminals (3) are emitted by at least one equipment of the network (4, 5) to be processed by at least one home location register (2), with the method including a step of routing said requests for location (50) to a home location standby register (6), when said register (2) is failing, **characterised in that** the method further comprises, upon reception of the request for location (50) of a mobile terminal (3), a subsequent step during which said standby register (6) includes no user data associated with said mobile terminal (3), a request (13) for user data to an information system (10) including data on all the users of said network and a step of receiving, by the standby register, a minimum of data on the user's profile to build a user's simplified profile on which the effective activation of the terminal on said network is based.

10. A method according to claim 9 including, prior to said routing step, a step of deactivating the mechanism authentifying the mobile terminals with said at least one network equipment (4, 5).

11. A method according to claim 9 or 10, wherein said register (2) is identified on a signalling network (SS7) belonging to said mobile telephone network (1) by an address, said requests for location (50) being emitted on said signalling network to said address,
the method including a step of configurating said standby register (6) with said address in the signalling network so as to route said requests for location to Lhe standby register (6).

12. A method according to claim 9 or 10, wherein the parameters of said network (1) are pre-set to give information on a main routing address identifying the register (1) and a second routing address indicating the standby register (6),
the routing of the requests for location (50) on said network (1) being executed during normal operation to the main address and automatically switching, when said register is failing, to a routing towards the second address.

13. A method according to any one of claims 11 to 12, wherein said request (13) relates to a request for an identifier of the network of said mobile terminal (MSISDN).

14. A method according to any one of claims 9 to 13, wherein said registers (2, 6) include data relating to the current locations of said mobile terminals (3), the method including a step of processing the request for location (50) of a mobile terminal by said register having received said request, the processing comprising the updating of said current location of said mobile terminal.

15. A method according to any one of claims 9 to 14, comprising a step of assigning, by said standby register (6), a profile to said mobile terminal, said profile being a profile of services available on said network (1).

16. A method according to the preceding claim, wherein said assigned profile is selected among a plurality of profiles as a function of the data returned by said information system (10) as an answer to said request.

## Patentansprüche

1. Vorrichtung zur nominalen Registrierung der Lokalisation (6) in einem Netz mobiler Telefonie (1), wobei die genannte Vorrichtung (6) Nutzerdaten umfasst, die ihre aktuelle Lokalisierung in dem genannten Netz einschließen, und Verarbeitungsmittel, die angeordnet sind, um eine Lokalisierungsanfrage (50) eines mobilen Nutzerterminals (3) zu empfangen und die aktuelle Lokalisierung des genannten mobilen Terminals zu aktualisieren, wobei die genannte Anfrage aus einer Ausrüstung (4, 5) des Netzes (1) stammt, **dadurch gekennzeichnet, dass** die genannten Verarbeitungsmittel angeordnet sind, um eine Anforderung (13) einer Datenanfrage an ein kommerzielles Informationssystem (10) auszugeben, das Profildaten aller Nutzer des genannten Netzes umfasst, was es der genannten Vorrichtung erlaubt, ein Minimum an Profildaten des Nutzers zurückzuerhalten, wenn die genannte Vorrichtung (1) keine mit dem genannten mobilen Terminal (3) verbundenen Daten umfasst, um ein vereinfachtes Profil des Nutzers zu erstellen, auf dessen Basis die effektive Aktivierung des Terminals auf dem genannten Netz realisiert wird.

2. Vorrichtung (6) gemäß Anspruch 1, in der die genannte Anforderung (13) sich auf wenigstens eine Netzkennung des genannten mobilen Terminals bezieht.

3. Kontinuitätssystem der Dienste in einem Netz mobiler Telefonie (1), das wenigstens ein nominales Aufzeichnungsgerät der Lokalisierung (3) und ein nominales Hilfs-Aufzeichnungsgerät der Lokalisierung (6) umfasst, wobei die genannten Aufzeichnungsgeräte Nutzerdaten umfassen und geeignet sind, Lokalisierungsdaten (50) von mobilen Nutzerterminals (3) zu verarbeiten, wobei die Anfragen (50) wenigstens von einer Ausrüstung (4, 5) des Netzes (1) ausgehen, wobei ein Informationssystem (10) Daten aller Nutzer des genannten Netzes umfasst und Umschaltmittel, die angeordnet sind, um die Lokalisierungsanfragen (50) an das genannte nominale Hilfs-Aufzeichnungsgerät der Lokalisierung (6) zu routen, wenn das genannte Aufzeichnungsgerät (2) ausgefallen ist, **dadurch gekennzeichnet, dass** das genannte nominale Hilfs-Aufzeichnungsgerät der Lokalisierung (6) angeordnet ist, um beim Empfang einer Lokalisierungsanfrage (50) eines mobilen Terminals (3) und wenn das nominale Hilfs-Aufzeichnungsgerät (6) keine Nutzerdaten umfasst, die dem genannten mobilen Terminal (3) zugeordnet sind, eine Anforderung (13) einer Nutzerdatenanfrage an das genannte Informationssystem (10) auszugeben, wobei das genannte nominale Hilfs-Aufzeichnungsgerät (6) der Lokalisierung geeignet ist, um ausgehend von einem Minimum an empfangenen Daten ein vereinfachtes Profil des Nutzers zu erstellen, auf dessen Basis die effektive Aktivierung des Terminals in dem genannten Netz realisiert wird.

4. System gemäß Anspruch 3, in dem die gespeicherten Nutzerdaten über die genannten Aufzeichnungsgeräte (2, 6) die Daten bezüglich der aktuellen Lokalisierung der genannten mobilen Terminals (3) umfassen, wobei die genannten Aufzeichnungsgeräte (2, 6) darüber hinaus angeordnet sind, um die genannten Daten bezüglich der aktuellen Lokalisierung bei der Verarbeitung der Lokalisierungsanfragen (50) zu aktualisieren.

5. System gemäß Anspruch 3 oder 4, in dem das genannte Aufzeichnungsgerät in einem Signalgebungsnetz, das zu dem genannten Netz mobiler Telefone (1) gehört, durch wenigstens eine Adresse identifiziert wird, wobei die genannten Lokalisierungsanfragen (50) in dem genannten Signalgebungsnetz an die genannte Adresse ausgegeben werden, wobei die genannten Umschaltmittel eine Nutzerschnittstelle umfassen, die angeordnet ist, um das genannte Hilfs-Aufzeichnungsgerät mit der genannten Adresse derart zu parametrieren, dass die genannten Lokalisierungsanfragen zum Hilfs-Aufzeichnungsgerät (6) gcroutet werden.

6. System gemäß Anspruch 3 oder 4, in dem die genannten Umschaltmittel die Vorab-Parametrierung des genannten Netzes (1) umfassen, und in der Protokollschicht MTP der Signalgebung des genannten Netzes eine erste Adresse des Aufzeichnungsgeräts (1) und eine zweite Adresse des Hills-Aufzeichnungsgeräts (6) angeben, wobei das Routen der Lokalisierungsanfrage (50) in dem Netz automatisch in die genannte zweite Adresse umschalten, wenn das genannte Aufzeichnungsgerät (1) ausfällt.

7. System gemäß Anspruch 3 bis 6, in dem das genannte Hilfs-Aufzeichnungsgerät (6) ein voreingestelltes Profil der in diesem Netz verfügbaren Dienste umfasst und angeordnet ist, um das genannte voreingestellte Profil dem mobilen Terminal (3) zuzuordnen.

8. System gemäß Anspruch 3 bis 6, in dem das genannte Hilfs-Aufzeichnungsgerät (6) eine Vielzahl von in dem genannten Netz (1) verfügbaren Dienstprofilen umfasst und angeordnet ist, um eines der genannten Profile dem genannten mobilen Terminal in Abhängigkeit von Daten (3) zuzuordnen, die von dem genannten Informationssystem (10) als Antwort auf die genannte Anforderung (13) zurückgeschickt worden sind.

9. Dienstkontinuitätsverfahren in einem Netz mobiler Telefonie (1), in dem Lokalisierungsanfragen (50) von mobilen Terminals (3), die aus wenigstens einer Netzausrüstung (4, 5) ausgegeben werden, um durch wenigstens ein nominales Aufzeichnungsgerät zur Lokalisierung (2) verarbeitet zu werden, wobei das Verfahren eine Stufe des Routens der genannten Lokalisierungsanfragen (50) umfasst, die an ein nominales Hilfs-Aufzeichnungsgerät (6) gesandt werden, wenn das genannte Aufzeichnungsgerät (2) ausgefallen ist, **dadurch gekennzeichnet, dass** das Verfahren darüber hinaus beim Empfang eine Lokalisierungsanfrage (50) eines mobilen Terminals (3), eine spätere Stufe, umfasst, gemäß der das genannte Hilfs-Aufzeichnungsgerät (6), wenn das genannte Hilfs-Aufzeichnungsgerät (6) keine Nutzerdaten umfasst, die dem genannten mobilen Terminal (3) zugeordnet sind, eine Anforderung (13) einer Anfrage nach Nutzerdaten an ein Informationssystem (10) ausgibt, das Daten aller Nutzer des genannten Netzes umfasst, und eine Empfangsstufe eines die Erstellung eines vereinfachten Profils des Nutzers erlaubenden Minimums an Nutzerprofildaten durch das Hilfs-Aufzeichnungsgerät, auf deren Basis die effektive Aktivierung des Terminals in dem genannten Netz realisiert wird.

10. Verfahren gemäß Anspruch 9, das vor der genannten Stufe des Routens eine Deaktivierungsstufe von Authentifizierungsmechanismen der mobilen Terminals bei der wenigstens einen Netzausrüstung (4, 5) umfasst.

11. Verfahren gemäß Anspruch 9 oder 10, in dem das genannte Aufzeichnungsgerät (2) in einem zu dem genannten Netz mobiler Telefonie (1) gehörenden Signalgebungsnetz (SS7) durch eine Adresse identifiziert wird, wobei die genannten Lokalisierungsanfragen (50) in dem genannten Signalgebungungsnetz an die genannte Adresse ausgegeben werden, wobei das Verfahren eine Stufe zum Konfigurieren des genannten Hilfs-Aufzeichnungsgeräts (6) mit der genannten Adresse in dem Signalgebungsnetz derart umfasst, dass die genannten Lokalisierungsanfragen zum Hilfs-Aufzeichnungsgerät (6) geroutet werden.

12. Verfahren gemäß Anspruch 9 oder 10, in dem das genannte Netz (1) vorab parametriert ist, um eine Hauptadresse zum Routen einzugeben, die das Aufzeichnungsgerät (1) identifiziert, und eine zweite Adresse zum Routen, die das Hilfs-Aufzeichnungsgerät (6) identifiziert, wobei das Routen der Lokalisierungsanfragen (50) in dem genannten Netz (1) im normalen Betrieb zu der Hauptadresse und mit einem automatischen Umschalten zu einem Routen an die zweite Adresse erfolgt, wenn das genannte Aufzeichnungsgerät ausfällt.

13. Verfahren gemäß Anspruch 11 bis 12, in dem die genannte Anforderung (13) eine Identifizierungsanfrage des Netzes des genannten mobilen Terminals (MSISDN) betrifft.

14. Verfahren gemäß Anspruch 9 bis 13, in dem die genannten Aufzeichnungsgeräte (2, 6) Daten bezüglich der aktuellen Lokalisierung der genannten mobilen Terminals (3) umfassen, wobei das Verfahren eine Verarbeitungsstufe der Lokalisierungsanfrage (50) eines mobilen Terminals durch das genannte Aufzeichnungsgerät umfasst, das die genannte Anfrage empfängt, wobei die Verarbeitung die Aktualisierung der genannten aktuellen Lokalisierung des genannten mobilen Terminals umfasst.

15. Verfahren gemäß Anspruch 9 bis 14, das eine Zuordnungsstufe eines Profils an das genannte mobile Terminal durch das genannte Hilfs-Aufzeichnungsgerät (6) umfasst, wobei das genannte Profil ein Profil der in dem genannten Netz (1) verfügbaren Dienste ist.

16. Verfahren gemäß einem der vorherigen Ansprüche, in dem das genannte Profil aus einer Vielzahl von Profilen in Abhängigkeit von Daten zugeordnet wird, die durch das genannte Informationssystem (10) als Antwort auf die genannte Anforderung zurückgesandt werden.
